# EUROPÄISCHE PATENTSCHRIFT

(11) **EP 3 275 302 B1**
(45) Veröffentlichungstag und Bekanntmachung des Hinweises auf die Patenterteilung: **27.02.2019**
(21) Anmeldenummer: 17401078.5
(22) Anmeldetag: 14.07.2017
(51) Int. Cl.: A01C 17/00, A01C 7/10

(54) **VERFAHREN UND HAFTMATTE FÜR DIE BILDGEBENDE BESTIMMUNG EINER VERTEILUNG VON LANDWIRTSCHAFTLICHEM STREUGUT**
METHOD AND ADHESIVE MAT FOR THE IMAGING OF THE DISTRIBUTION OF AGRICULTURAL MATERIAL TO BE SPREAD
PROCÉDÉ ET TAPIS ADHÉSIF PERMETTANT DE DÉTERMINER PAR IMAGERIE DE LA DISTRIBUTION DE MATÉRIAUX GRANULAIRES AGRICOLES

(30) Priorität: 25.07.2016 DE 102016113636
(43) Veröffentlichungstag der Anmeldung: 31.01.2018
(73) Patentinhaber: Amazonen-Werke H. Dreyer GmbH & Co. KG, 49205 Hasbergen (DE)
(72) Erfinder: Fröschle, Heike, 49124 Georgsmarienhütte (DE); Ströbel-Fröschle, Markus, 49124 Georgsmarienhütte (DE)

(56) Entgegenhaltungen:
- EP-A1- 2 940 212
- DE-A1-102014 103 964
- User Manual: "NI Vision NI Vision for LabWindows TM /CVI TM User Manual NI Vision for LabWindows/CVI User Manual", , 30. Juni 2009 (2009-06-30), XP055421416, Gefunden im Internet: URL:https://graftek.biz/system/files/344/o riginal/NI_Vision_for_LabWindows_CVI_User_ Manual_052013.pdf?1381781041 [gefunden am 2017-11-02]
- Bahadir Karasulu ET AL: "Moving Object Detection and Tracking in Videos" In: "Moving Object Detection Using Background Subtraction", 30. Januar 2013 (2013-01-30), Springer International Publishing, Cham, XP055421331, ISSN: 2191-5768 ISBN: 978-3-319-07386-6 Seiten 7-30, DOI: 10.1007/978-1-4614-6534-8_2, * das ganze Dokument *

## Beschreibung

Die Erfindung betrifft ein Verfahren zum Bestimmen einer Verteilung von landwirtschaftlichen Streugut gemäß dem Oberbegriff des Anspruchs 1 und eine Haftmatte/-platte/- schale für die bildgebende Bestimmung einer Verteilung von landwirtschaftlichen Streugut gemäß dem Oberbegriff des Anspruchs 9.

Zum Bestimmen einer Verteilung von Düngerkörnern, insbesondere quer zur Fahrtrichtung eines Düngerstreuers, sind gattungsgemäße Verfahren und Haftmatten beispielsweise aus der DE 10 2014 103 964 A1 bekannt. Das Bestimmen eines Mischungsverhältnisses unterschiedlicher Düngerkörner einer solchen Verteilung ist ferner in der DE 10 2014 108 561 A1 offenbart. Demnach werden Haftmatten oder Haftplatten zunächst zum Auffangen und Festhalten ausgestreuter Düngerkörner ausgelegt. Danach werden Düngerkörner beim Überfahren eines von der Haftmatte oder Haftplatte bedeckten Bodenbereichs mit einem Düngerstreuer ausgestreut. Die bestreuten Haftmatten oder Haftplatten werden dann in wenigstens einem digitalen Kamerabild abgebildet. Schließlich erfolgen das Lokalisieren der Düngerkörner im Kamerabild und das Berechnen einer Ist-Verteilung der Düngerkörner auf den Haftmatten oder Haftplatten.

Ein Programm zur Bildauswertung ist beispielsweise aus der Bedienungsanweisung "NI Vision NI Vision for LabWindows TM /CVI TM User Manual NI Vision for LabWindows/CVI User Manual" vom 30. Juni 2009 bekannt.

Ferner sind Verfahren zur Bildauswertung aus dem Dokument KARASULU ET AL, Performance Evaluation Software, Moving Object Detection and Tracking in Videos, 30. Januar 2013, Springer International Publishing, bekannt.

Aus der Druckschrift EP 2 940 212 A1 ist ferner ein Verfahren zum Herstellen von Kunstrasen bekannt.

Bekanntermaßen sind an den Haftmatten oder Haftplatten abstehende Strukturen, wie beispielsweise Stäbchen, Zungen, Haken oder dergleichen ausgebildet, um Düngerkörner in einer Vielzahl von an den Haftmatten oder Haftplatten ausgebildeten Auffangräumen aufzufangen und dort festzuhalten. Auch eine Segmentierung der Haftmatte in mehrere vorzugsweise gleich große Auffangräume mittels senkrechten Wandungselementen ist bekannt. Ferner wurden in obigen Druckschriften dunkle Haftmatten oder Haftplatten vorgeschlagen, um helle Düngerkörner in den Kamerabildern möglichst kontrastreich darzustellen. Auch wird eine gegebenenfalls vorteilhafte Farbanpassung der Haftmatten oder Haftplatten an spezielle Düngersorten vorgeschlagen.

Es hat sich jedoch herausgestellt, dass mittelgraue bis schwarze Haftmatten nur für einen unzureichend kleinen Teil der verfügbaren Düngersorten und nur unter günstigen Lichtverhältnissen eine ausreichend zuverlässige Identifizierung und Quantifizierung der Düngerkörner ermöglichen. Zudem stört eine gegebenenfalls vorhandene Verschmutzung der Haftmatten. Eine individuelle Anpassung der Farbe der Haftmatten an bestimmte Düngersorten ist aufwändig und ein Austausch der Haftmatten zwecks Anpassung im Arbeitsbetrieb unpraktisch.

Es besteht daher der Bedarf für Haftmatten, Haftplatten oder dergleichen Auffangschalen, die für unterschiedliche Sorten von landwirtschaftlichem Streugut, insbesondere unterschiedliche Düngersorten, bei unterschiedlichen Lichtverhältnissen und/oder unter Einfluss von Verschmutzungen eine zuverlässige Quantifizierung der erzeugten Streugutverteilung ermöglicht. Ebenso besteht der Bedarf für entsprechend verbesserte Verfahren zur Bestimmung der erzeugten Verteilung und zur Farbauswahl von Haftmatten, Haftplatten oder dergleichen Auffangschalen.

Die gestellte Aufgabe wird mit einem Verfahren gemäß Anspruch 1 gelöst. Demnach dient dieses zum Bestimmen einer Verteilung von landwirtschaftlichem Streugut, insbesondere in Form von Düngerkörnern. Das Streugut wird auf einer Auffangfläche wenigstens einer Haftmatte/-platte/-schale aufgefangen. Ferner wird die Verteilung des Streuguts mittels Bildauswertung ermittelt. Erfindungsgemäß weißt die Auffangfläche einen Farbton auf, der sich von einem Farbton des Streuguts im HSI/HSL/HSV-Farbraum um einen Farbwinkel von wenigstens 20°, insbesondere wenigstens 40°, unterscheidet.

Dies ermöglicht insbesondere im Gegensatz zu einer Graustufenauswertung eine bezüglich unterschiedlicher Lichtverhältnisse weniger empfindliche Identifizierung und Quantifizierung des Streuguts, da der Farbton des Streuguts und der Auffangfläche weitgehend unabhängig von der Beleuchtung ermittelt werden kann. Es lassen sich somit zuverlässige Unterscheidungskriterien in der Bildauswertung zur Identifizierung und Quantifizierung des Streuguts festlegen. Um wenigstens 20° voneinander abweichende Farbwinkel lassen sich beispielsweise auch vom menschlichen Auge zuverlässig unterscheiden.

Es kann sowohl der HSI-Farbraum, der HSL-Farbraum, der HSV-Farbraum als auch davon abweichende Farbräume verwendet werden, die eine Charakterisierung der Farben des Streuguts und der Auffangfläche mittels getrennter Parameter für den Farbwinkel und die Farbsättigung erlauben. Die Farbhelligkeit kann auf unterschiedliche Weise definiert sein, wie beispielsweise beim alternativen HSB-Farbraum.

Als landwirtschaftliches Streugut kommt prinzipiell jedes streufähige Material in Frage, das einen bestimmten Farbton oder Farbtöne in einem vorgegebenen Farbtonbereich aufweist.

Erfindungsgemäß liegt der Farbton der Auffangfläche in einem Farbwinkelbereich von 230° bis 310°, insbesondere von 270° bis 290°, des HSI/HSL/HSV-Farbraums. Es hat sich herausgestellt, dass nur wenige oder keine handelsüblichen Düngersorten einen Farbton innerhalb dieses Farbwinkelbereichs aufweisen. Entsprechend lässt sich für die Identifizierung und/oder Quantifizierung des Streuguts ein besonders ausgeprägter Farbkontrast zwischen dem Streugut und der Auffangfläche herstellen. Dies erleichtert die zuverlässige Erkennung und Quantifizierung des Streuguts auf der Auffangfläche. Ein Farbwinkel von 280° entspricht näherungsweise der Farbe Magenta.

Vorzugsweise weist die Auffangfläche im HSI/HSL/HSV-Farbraum eine Farbsättigung von wenigstens 90% und/oder eine Farbhelligkeit von wenigstens 40% auf. Eine vergleichsweise hohe Farbsättigung verbessert den Farbkontrast zwischen dem Streugut und der Auffangfläche und begünstigt eine zuverlässige Erkennung und Quantifizierung des Streuguts auf der Auffangfläche. Eine Farbhelligkeit von wenigstens 40% begünstigt zusätzlich die Unterscheidung von Streugut und Auffangfläche bei der Bildauswertung, insbesondere auch bei vergleichsweise schwacher Ausleuchtung der Auffangflächen. Zudem wird die Unempfindlichkeit des Verfahrens gegenüber Verschmutzungen der Auffangfläche verbessert. Zudem wird auch bei durchscheinendem oder nahezu transparentem Saatgut eine Erkennbarkeit desselben ermöglicht, indem insbesondere nach der Helligkeit zwischen bedeckten und unbedeckten Flächen der Haftmatte, Haftplatte, Auffangschale oder dergleichen differenziert wird.

Vorzugsweise wird der Farbton der Auffangfläche in Form eines Farbwinkels oder Farbwinkelbereichs des HSI/HSL/HSV-Farbraums in einer Recheneinheit zur Bildauswertung gespeichert. Dies ermöglicht eine automatische Erkennung und/oder Quantifizierung des Streuguts auf der Auffangfläche insbesondere durch Ausblenden des Farbwinkels oder Farbwinkelbereichs der Auffangfläche im Sinne einer Farbwinkelfilterung.

Vorzugsweise werden Bilddaten der Auffangfläche mit aufgefangenem Streugut bei der Bildauswertung aus RGB-Farbkanälen oder dergleichen (GBR usw.) in den HSI/HSL/HSV-Farbraum transformiert und in einem elektronischen Farbwinkelfilter gefiltert. Digital aufgenommene Bilddaten liegen üblicherweise zunächst als RGB-Werte vor. Die Transformation in den HSI/HSL/HSV-Farbraum erleichtert den Vergleich zwischen dem abgebildeten Streugut und der abgebildeten Auffangfläche hinsichtlich ihrer Farbigkeit. Ferner lassen sich für das menschliche Auge vergleichsweise einfach nachvollziehbare Auswahlkriterien anhand von Farbwinkeln beziehungsweise Farbtönen festlegen, um die Verfahren und Vorrichtungen zur Verteilungsmessung zu optimieren.

Vorzugsweise ordnet der Farbwinkelfilter Bildpunkten, deren Farbwinkel in einem der Auffangfläche zugeordneten Filterwinkelbereich des HSI/HSL/HSV-Farbraums liegt, einen Hintergrundwert zu, insbesondere den binären Wert 0, und Bildpunkten, deren Farbwinkel außerhalb des Filterwinkelbereichs liegt, einen Vordergrundwert, insbesondere den binären Wert 1. Vordergrundwert und Hintergrundwert bzw. binäre Werte könnten auch miteinander vertauscht werden.

Der Farbwinkelfilter erzeugt somit ein Zweitstufenbild, wie beispielsweise nur Schwarz und Weiß, beziehungsweise einen entsprechenden Zweistufen-Datensatz, der die einzelnen Bildpunkte entweder dem Streugut oder der unverdeckten Auffangfläche zuordnet. Dies ermöglicht eine gleichermaßen einfache visuelle als auch rechnerische Darstellung des Bedeckungsgrads der Auffangfläche mit dem Streugut.

Vorzugsweise werden die Anzahl von Bildpunkten mit dem Vordergrundwert und die Anzahl von Bildpunkten mit dem Hintergrundwert für wenigstens einen Auswertbereich der Auffangfläche bestimmt. Somit lässt sich ein Bedeckungsgrad der Auffangfläche mit dem Streugut für den Auswertbereich und/oder die gesamte Auffangfläche ermitteln.

Vorzugsweise wird ferner ein RGB-Farbabgleich an der Auffangfläche mit aufgefangenem Streugut, insbesondere einschließlich Weißabgleich und/oder Schwarzabgleich, anhand von entsprechend gefärbten Kalibrierungsflächen vorgenommen, die auf der Haftmatte-/platte/-schale ausgebildet sind oder an diese angebracht werden. Dies ermöglicht eine Bildkalibrierung beziehungsweise einen Farbabgleich unter den vor Ort herrschenden Lichtverhältnissen. Ferner lassen sich unterschiedliche Bildaufnahmegeräte, wie beispielsweise Smartphones, Kameras oder dergleichen vor Ort mit der Haftmatte/-platte/- schale für die Bildauswertung kalibrieren.

Vorzugsweise wird die Verteilung des Streuguts quer zur Fahrtrichtung eines Schleuderstreuers bestimmt.

Gemäß eines Verfahrens zur Farbauswahl einer Haftmatte/-platte/-schale für landwirtschaftliches Streugut, das insbesondere aus Düngerkörnern besteht, werden unterschiedliche Sorten des Streuguts digital abgebildet sowie Bilddaten des Streuguts in den HSI/HSL/HSV-Farbraum transformiert und in Farbwinkel-Histogramme umgerechnet, wobei aus den Farbwinkel-Histogrammen ein Summenhistogramm gebildet wird, und wobei für eine Auffangfläche der Haftmatte ein Farbton gewählt wird, der in einem Farbwinkelbereich des Summenhistogramms mit unterdurchschnittlicher und insbesondere minimaler Häufigkeitsdichte liegt. Demnach dient dieses zur Farbauswahl für eine Haftmatte/-platte/-schale zum Auffangen landwirtschaftlichen Streuguts. Das Streugut besteht insbesondere aus Düngerkörnern. Demnach werden unterschiedliche Sorten des Streuguts digital abgebildet und Bilddaten des Streuguts in den HSI/HSL/HSV-Farbraum transformiert. Die transformierten Bilddaten werden in Farbwinkel-Histogramme umgerechnet. Aus den einzelnen Farbwinkel-Histogrammen wird ein Summen-histogramm gebildet. Schließlich wird für eine Auffangfläche der Haftmatte/-platte/-schale ein Farbton gewählt, der in einem Farbwinkelbereich des Summenhistogramms mit unterdurchschnittlicher und insbesondere minimaler Häufigkeitsdichte liegt.

Somit lässt sich ein Farbton für die Auffangfläche ermitteln, der bei handelsüblichen Streugut, insbesondere Düngerkörnern, selten oder gar nicht vorkommt. Entsprechend bildet die Auffangfläche mit den meisten Sorten des Streuguts einen vergleichsweise starken Farbkontrast und ermöglicht somit eine zuverlässige Erkennung und/oder Quantifizierung einer Vielzahl von Sorten des Streuguts auf der Auffangfläche.

Bereiche minimaler Häufigkeitsdichte zeigen im Summenhistogramm Bereiche an, in denen nur wenig entsprechend gefärbte Düngersorten oder dergleichen vorliegen. Vorzugsweise wird der Farbwinkelbereich des Farbraums in einheitlich breite Klassen aufgeteilt. Dies ist jedoch nicht zwingend erforderlich.

Vorzugsweise wird das Summenhistogramm für wenigstens 100 unterschiedliche Sorten des Streuguts berechnet. Zu diesem Zweck könnten beispielsweise Farbwinkel-Histogramme für unterschiedliche Sorten des Streuguts in einer entsprechenden Bibliothek abgelegt werden und je nach Bedarf zu einem Summenhistogramm zusammengefasst werden. Beispielsweise könnte ein Summenhistogramm für sämtliche handelsüblichen Sorten des Streuguts erstellt werden oder aber für eine zu einem bestimmten Anwendungszweck vorrangig zu berücksichtigende Gruppe von Sorten des Streuguts. Die gestellte Aufgabe wird ebenso mit einer Haftmatte/-platte/-schale gemäß Anspruch 9 gelöst. Demnach dient diese der bildgebenden Bestimmung einer Verteilung von landwirtschaftlichem Streugut, das insbesondere aus Düngerkörnern besteht. Die Haftmatte/- platte/-schale umfasst eine mittels abstehender Strukturen eine Vielzahl ausgebildete Auffangräume aufweisende Auffangfläche zum Auffangen des Streuguts. Erfindungsgemäß weist die Auffangfläche einen Farbton auf, der in einem Farbwinkelbereich von 270° bis 290°, des HSI/HSL/HSV-Farbraums liegt.

Vorzugsweise weist die Auffangfläche im HSI/HSL/HSV-Farbraum eine Farbsättigung von wenigstens 90% und/oder eine Farbhelligkeit von wenigstens 40% auf.

Vorzugsweise umfasst die Haftmatte/-platte/-schale je wenigstens eine rote, grüne und blaue Kalibrierungsfläche für einen RGB-Farbabgleich von Bilddaten der Haftmatte/- platte/-schale und des Streuguts. Dies ermöglicht einen zuverlässigen Farbabgleich unter den Einsatzbedingungen vor Ort und unter Verwendung unterschiedlicher Bildaufnahmegeräte, wie beispielsweise Smartphones, Kameras oder dergleichen.

Vorzugsweise umfasst die Haftmatte/-platte/-schale ferner wenigstens eine weiße und/oder schwarze Kalibrierungsfläche für einen Weißabgleich und/oder Schwarzabgleich von Bilddaten der Haftmatte/-platte/-schale und des Streuguts. Damit lassen sich unterschiedliche Lichtverhältnisse und Lichtempfindlichkeiten des jeweiligen Bildaufnahmegeräts vor Ort berücksichtigen.

Bevorzugte Ausführungsformen der Erfindung sind in den Zeichnungen dargestellt. Es zeigen:
- Figur 1: eine schematische Darstellung des erfindungsgemäßen Verfahrens unter Verwendung einer erfindungsgemäßen Haftmatte/-platte/-schale;
- Figur 2: eine schematische Darstellung eines Kamerabilds von Streugut auf der Auffangfläche vor (oben) und nach (unten) einer Farbwinkelfilterung; und
- Figur 3: ein Beispiel für ein Farbwinkel-Histogramm einer Düngersorte (oben) und ein aus einer Vielzahl von Farbwinkel-Histogrammen gebildetes Summenhistogramm (unten).

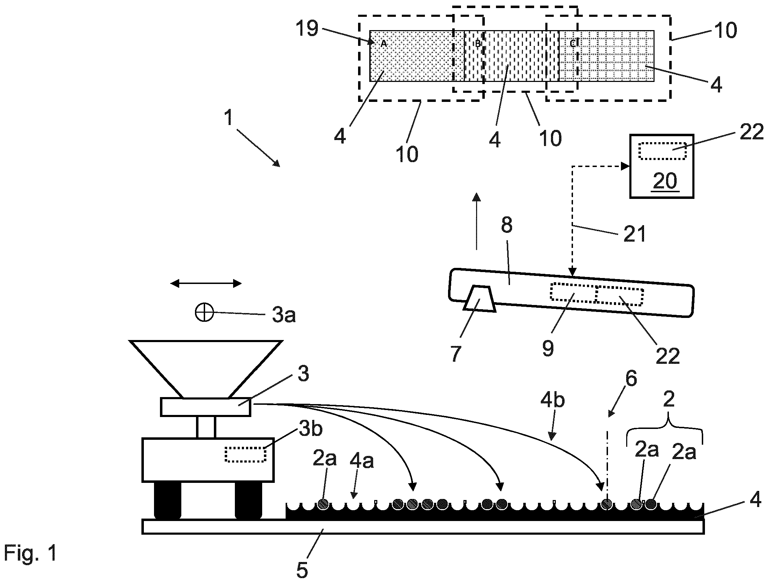

Wie die Figur 1 erkennen lässt, umfasst die erfindungsgemäße Vorrichtung 1 zum Bestimmen einer örtlichen Verteilung von Streugut 2, das beispielsweise aus Düngerkörnern 2a besteht, die von einem Düngerstreuer 3 in einer Richtung quer zu dessen Fahrtrichtung 3a ausgestreut werden, wenigstens eine Haftmatte/-platte/-schale 4, die quer zur Fahrtrichtung 3a auf einer Ackerfläche 5 oder dergleichen ausgelegt wird. Die nicht größenmaßstäblich dargestellte Haftmatte/-platte/-schale 4 ist derart ausgebildet, dass sie vom Düngerstreuer 3 weg geschleuderte Düngerkörner 2a im Wesentlichen am Ort 6 ihres Auftreffens einfängt und festhält.

Es ist ferner eine Kamera 7 vorhanden, die vorzugsweise in ein Mobilfunkgerät 8, wie beispielsweise ein Mobiltelefon, integriert ist. In das Mobilfunkgerät 8 integriert ist ferner eine Recheneinheit 9, die zur Bildauswertung von Kamerabildern 10 ausgebildet ist, in denen die mit Düngerkörnern 2a bestreute Haftmatte/-platte/-schale 4 in einer Draufsicht abgebildet wird. Hierfür können mehrere Haftmatten/-platte/-schalen 4 aneinander gelegt werden, wie dies in der Figur 1 oben schematisch angedeutet ist. Ebenso wäre es denkbar, die Haftmatte/-platte/-schale 4 als streifenförmige flexible Bahn auszubilden, die sich beispielsweise ausrollen lässt.

Der von der wenigstens einen Haftmatte/-platte/-schale 4 bedeckte Bodenbereich wird vorzugsweise in überlappenden Kamerabildern 10 abgebildet, derart, dass sich die Kamerabilder 10 für die Bildauswertung zu einem virtuellen Panoramabild oder dergleichen zusammensetzen lassen.

Die Haftmatte/-platte/-schale 4 umfasst eine Vielzahl von mittels Stäbchen, Zungen, Haken oder dergleichen voneinander getrennten Auffangräume 4a, die gemeinsam eine Auffangfläche 4b der Haftmatte/-platte/-schale 4 ausbilden.

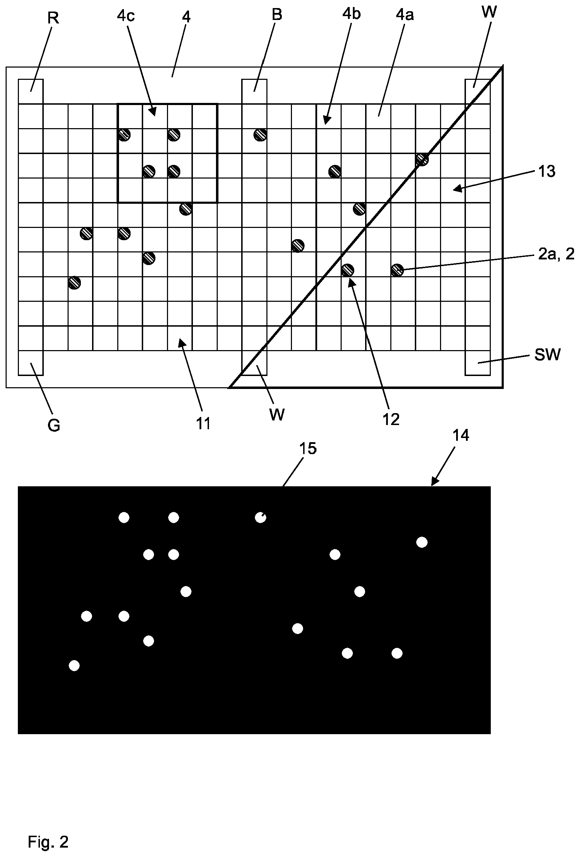

Dies ist in der Figur 2 schematisch in einer Draufsicht angedeutet. Die Auffangfläche 4b weist einen Farbton 11 auf, der sich von einem Farbton 12 des Streuguts 2 bzw. der Düngerkörner 2a hinsichtlich eines im HSI-Farbraum oder HSL-Farbraum oder HSV-Farbraum definierten Farbwinkels H um wenigstens 20° unterscheidet, vorzugsweise um wenigstens 40°. Der Farbwinkel H wird allgemein gebräuchlich auch als Farbwert oder Hue bezeichnet.

Die Farben des Streuguts 2 bzw. der Düngerkörner 2a und der Auffangfläche 4b sind ferner durch die jeweilige Farbsättigung S und die Farbhelligkeit I, L oder V definiert. Derartige auf dem Farbwinkel H, der Farbsättigung S und der jeweiligen Farbhelligkeit basierende Farbräume sind allgemein bekannt, ebenso deren Umrechnung in RGB-Farbwerte oder CMY-Farbwerte und umgekehrt. Beispielsweise erfolgt eine Transformation zwischen RGB und HSI, HSL oder HSV nach Formelsätzen von Gonzalez und Woods, Foley und Van Dam oder Travis.

Üblicherweise liegen Bilddaten digitaler Bildaufnahmegeräte als RGB-Werte oder in dergleichen Farbkanälen zerlegt vor. Nach Umrechnung gemäß obiger Formelsätze in den HSI/HSL/HSV-Farbraum kann ein Vergleich von Farbtönen in Anlehnung an das physiologische Farbempfinden auf vergleichsweise einfache Weise rechnerisch erfolgen sowie eine Vorauswahl durch einen Bediener getroffen werden.

In der Figur 2 ist die Auffangfläche 4b mit den Auffangräumen 4a und dem darauf verteilten Streugut 2 stark vereinfacht dargestellt. Ferner ist schematisch ein durch Schattenwurf 13 verdunkelter Bereich schematisch (als Dreieck) angedeutet. Ein beliebiger Auswertbereich 4c der Auffangfläche 4b ist beispielhaft in Form von sechzehn Auffangräumen 4a angedeutet.

Für einen Farbabgleich, Weißabgleich und/oder Schwarzabgleich sind vorzugsweise an der Haftmatte/-platte/-schale 4 beispielhaft dargestellte Kalibrierungsflächen R für die Farbe Rot, G für die Farbe Grün, B für die Farbe Blau, W für die Graustufe Weiß und SW für die Graustufe Schwarz vorhanden. Damit lassen sich die einzelnen Farbkanäle gemäß RGB auch bei unterschiedlichen Lichtverhältnissen und/oder bei Verwendung unterschiedlicher Bildaufnahmegeräte wie beispielsweise eines Smartphones 8, auf miteinander vergleichbare Werte für die anschließende Bildauswertung kalibrieren. Die Kalibrierungsflächen können integraler Bestandteil der Haftmatte/-platte/-schale 4 sein oder daran temporär angebracht werden.

Im Beispiel der Figur 2 weist das Streugut 2 einen Farbton gemäß einen Farbwinkel H von 200° auf, die Auffangfläche 4b einen Farbwinkel H von 280°. Eine Unterscheidung dieser Bilddaten in den ursprünglichen RGB-Farbkanälen wäre vergleichsweise komplex und die Rechenergebnisse für den Anwender schwer zu interpretieren. Die Erkennung und Lokalisierung des Streuguts 2 würde zudem durch den in der Figur 2 angedeuteten Schattenwurf 13 verschlechtert.

Gemäß der beschriebenen Ausführungsform werden die Bilddaten aus den RGB-Farbkanälen in den HSI/HSL/HSV-Farbraum transformiert durch einen elektronischen Farbwinkelfilter (nicht dargestellt) in eine Gruppe von Hintergrundwerten 14 und eine Gruppe von Vordergrundwerten 15 aufgeteilt. Die Hintergrundwerte 14 haben beispielsweise den binären Wert 0, die Vordergrundwerte 15 den binären Wert 1. Es wird somit eine Zweitstufen-Darstellung der unbedeckten Auffangfläche 4b und deren Bedeckung mit Streugut 2 bzw. Düngerkörnern 2a erzeugt. Dies ist in der Figur 2 unten schematisch dargestellt.

Beispielsweise ist der Farbwinkelfilter als ein Bandpass-Filter mit einem Filterwinkelbereich von 280° ± 5° definiert. Der Farbwinkelfilter ordnet dann allen Bildpunkten, die innerhalb dieses Farbwinkelbereichs / Bandpasses liegen, den Hintergrundwert 14 zu. Allen Bildpunkten des Auffangbereichs 4b, die außerhalb dieses Filterwinkelbereichs liegen, ordnet der Farbwinkelfilter den Vordergrundwert 15 zu. Daraus resultiert die Zweitstufen-Darstellung der Figur 2 unten, bei der Randbereiche der Haftmatte/-platte/- schale 4 einschließlich der Kalibrierungsflächen R, G, B, W, SW der Übersichtlichkeit halber ausgeblendet wurden.

Die von dem Farbwinkelfilter gefilterten Bilddaten ermöglichen sowohl eine einfache visuelle Darstellung auf einem Bildschirm als auch eine einfache und zuverlässige Ermittlung des Bedeckungsgrads einzelner Auswertbereiche 4c der Auffangfläche 4b und/oder der Auffangfläche 4b insgesamt mit dem Streugut 2. Zu diesem Zweck sind in dem jeweiligen Auswertbereich 4c lediglich die Anzahl der Bildpunkte mit dem Vordergrundwert mit der Anzahl der Bildpunkte mit dem Hintergrundwert zu vergleichen.

Da die Farbtöne verschiedener Sorten des Streuguts 2 durch unterschiedliche Hersteller vorgegeben sind, besteht eine weitere Aufgabe der Erfindung darin, für die Haftmatte/- platte/-schale 4 eine Auffangfläche 4b mit einem geeigneten Farbton 11 auszuwählen beziehungsweise festzulegen.

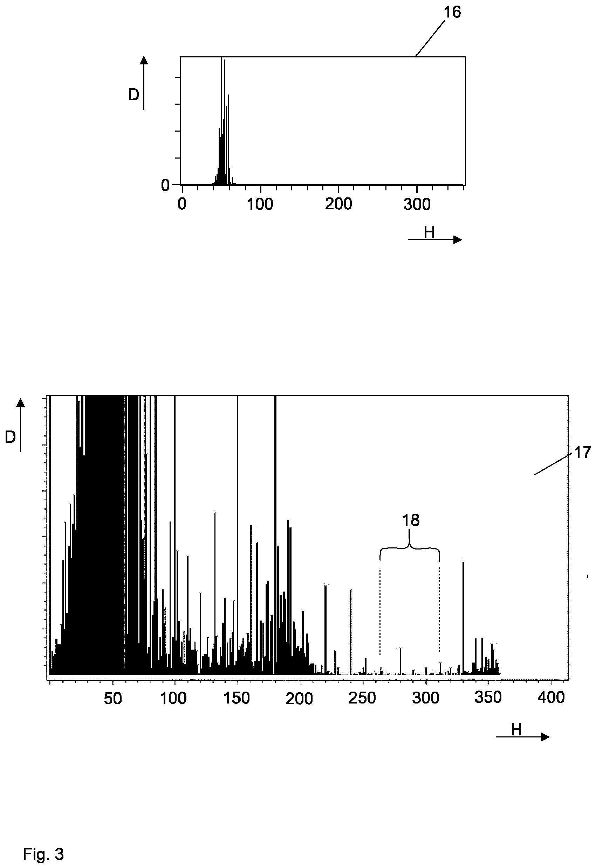

Wie die Figur 3 diesbezüglich schematisch andeutet, können unterschiedliche Sorten des Streuguts 2 jeweils sortenrein digital abgebildet und die zugehörigen Bilddaten in den HSI/HSL/HSV-Farbraum transformiert werden. Die transformierten Bilddaten werden dann als Farbwinkel-Histogramm 16 dargestellt und für die weitere Berechnung abgespeichert. Dies ist in der Figur 3 oben schematisch für eine bestimmte Düngersorte gezeigt.

Durch Überlagerung einer Vielzahl derartiger Farbwinkel-Histogramme 16 lässt sich ein Summenhistogramm 17 erzeugen, das eine Farbwinkelverteilung für eine Vielzahl handelsüblicher Sorten des Streuguts, insbesondere von Düngersorten, wiedergibt.

In der Figur 3 unten ist im Summenhistogramm 17 ein Bereich 18 angedeutet, in dem die Häufigkeitsdichte D unterdurchschnittlich und insbesondere minimal ist. Als unterdurchschnittlich wird beispielsweise ein Wert unter dem über alle Farbwinkel gemittelten Mittelwert der Häufigkeitsdichte angesehen. Der Bereich 18 minimaler Häufigkeitsdichte D kann je nach Relevanz einzelner Sorten des Streuguts 2 so festgelegt werden, dass ein praktikables Arbeiten mit möglichst vielen häufig verwendeten Sorten des Streuguts 2 ermöglicht wird.

In der Praxis hat sich für den Farbton 11 ein Farbwinkel H im Bereich von 230° bis 310° als prinzipiell geeignet erwiesen, da nur wenige Düngersorten mit derartigen Farbtönen kommerziell erhältlich sind. Als besonders günstig hat sich ein Bereich von 260° bis 310° herausgestellt, um häufig anzutreffende Düngersorten oder Pflanzenschutzmittel, wie beispielsweise Schneckenkorn, Blaukorn und ähnlich gefärbte Düngersorten nicht dem Hintergrundwert zuzuordnen und somit von der erfindungsgemäßen Erkennung auf Grundlage des Farbtons auszuschließen. Als optimal wird ein Farbwinkel H in einem Bereich von 270° bis 290° angesehen, da in diesem Bereich keine oder nur selten verwendete Düngersorten gemessen wurden.

Somit lässt sich durch geeignete Wahl des Farbwinkels H der Auffangfläche 4b eine Haftmatte/-platte/-schale 4 bereitstellen, die sich für eine zuverlässige flächige Verteilungsmessung nahezu sämtlicher handelsüblicher Düngersorten eignet. Dieser Ansatz lässt sich prinzipiell auch auf anderweitiges landwirtschaftliches Streugut 2 anwenden. Hierzu sind lediglich gebräuchliche Sorten des jeweiligen Streuguts 2 digital abzubilden und die zugehörigen Bilddaten in den HSI/HSL/HSV-Farbraum zu transformieren. Durch anschließende Auswertung der transformierten Bilddaten in Histogrammen lassen sich geeignete Farbwinkelbereiche für die zugehörigen Haftmatten/-platten/-schalen 4 ermitteln und herstellen.

Somit ermöglichen die Verfahren gemäß der Ansprüche 1 und 10 sowie die entsprechend ausgebildeten Haftmatten/-platten/-schalen 4 gemäß Anspruch 12 eine vielseitig anzuwendende Messunterlage sowie einfache anzuwendende Verfahren für die Optimierung der Bestimmung von Verteilungen landwirtschaftlichen Streuguts 2.

Eine Anwendung Haftmatten/-platten/-schalen 4 in der Praxis kann wie folgt aussehen:
Wenigstens eine Haftmatte/-platte/-schale 4 wird im Wesentlichen quer zur Fahrrichtung 3a oder Fahrspur des Düngerstreuers 3 ausgelegt. Beim Vorbeifahren des Düngerstreuers 3 an der wenigstens einen Haftmatte/-platte/-schale 4 werden Düngerkörner 2a bei vorgegebenen Ist-Einstellwerten (Maschinenparametern) des Düngerstreuers 3 ausgestreut und dabei von der Haftmatte/-platte/-schale 4 im Wesentlichen jeweils am Ort 6 ihres Auftreffens eingefangen.

Die eingefangenen Düngerkörner 2a werden auf der Haftmatte/-platte/-schale 4 liegend in einer Draufsicht in wenigstens einem Kamerabild 10 digital abgebildet. Gegebenenfalls weisen mehrere Haftmatten/-platten/-schalen 4 Markierungen 19 zu deren Identifizierung in den Kamerabildern 10 auf. Die Bilddaten werden in der Recheneinheit 9 in den HSI/HSL/HSV-Farbraum transformiert durch einen elektronischen Farbwinkelfilter in eine Gruppe von Hintergrundwerten 14 und eine Gruppe von Vordergrundwerten 15 aufgeteilt. Die Berechnung einer Ist-Verteilung der Düngerkörner 2a entlang der wenigstens einen Haftmatte/-platte/-schale 4 erfolgt durch Vergleich der Anzahl von Bildpunkten mit Hintergrundwerten 14 und Vordergrundwerten 15, also durch Berechnung einer lokalen Bedeckung der Auffangfläche 4b mit dem Streugut 2 vorzugsweise in der Recheneinheit 9.

Auf diese Weise lässt sich überprüfen, ob mit den Ist-Einstellwerten des Düngerstreuers 3 eine gewünschte Verteilungsqualität erzielt wird. Ist dies nicht der Fall, werden die Ist-Einstellwerte des Düngerstreuers 3 auf der Grundlage der gemessenen Ist-Verteilung der Düngerkörner 2a gezielt korrigiert / optimiert. Unter der Ist-Verteilung ist wie üblich die Düngermenge pro Flächeneinheit oder pro Längeneinheit, insbesondere quer zur Fahrtrichtung 3a, gemeint.

Die Ist-Einstellwerte des Düngerstreuers 3 könnten zu diesem Zweck entweder manuell am Mobilfunkgerät 8 eingegeben werden, oder von einem am Düngerstreuer 3 vorhandenen Bordcomputer 3b an die Recheneinheit 9 übermittelt werden, beispielsweise mittels drahtloser Datenverbindung mittels Bluetooth, WLAN oder dergleichen.

Ebenso könnten aus der gemessenen Ist-Verteilung der Düngerkörner 2a und den Ist-Einstellwerten des Düngerstreuers 3 Soll-Einstellwerte an den Bordcomputer 3b des Düngerstreuers 3, insbesondere mittels drahtloser Datenverbindung, übermittelt werden. Die Soll-Einstellwerte könnte dann entweder von dem Bordcomputer 3b des Düngerstreuers 3 automatisch übernommen werden, oder als Einstellempfehlung am Düngerstreuer 3 angezeigt und vom Anwender bestätigt oder editiert werden.

Die Berechnung der Düngerverteilung, also der Ist-Verteilung der Düngerkörner 2a, könnte alternativ in einem zentralen Düngeservice-Server 20 erfolgen. Zu diesem Zweck können Bilddaten der Kamerabilder 10 mittels einer Datenübertragung 21, beispielsweise mittels Mobilfunk, an den Düngerservice-Server 20 übertragen werden, um dort die Bildauswertung und/oder die Berechnung der Ist-Verteilung der Düngerkörner 20 vorzunehmen. Es lassen sich in einem zentralen Düngerservice-Service 20 sowohl komplexe Berechnungsaufgaben lösen, als auch Messdaten und/oder Ergebnisdaten mit einer Datenbank 22 abgleichen. Die Datenbank 22 enthält insbesondere Einstellwerte für den Düngerstreuer 3, die sich abfragen und mit der gemessenen Ist-Verteilung der Düngerkörner 2a abgleichen lassen, um Soll-Einstellwerte im Sinne von Einstellempfehlungen auszugeben.

Das Mobilfunkgerät 8 ist vorzugsweise programmierbar, um die Auswertung der Kamerabilder 10 und die Berechnung der Ist-Verteilung der Düngerkörner 2a mittels Mobilfunk-Applikation auszuführen. Dies ermöglicht dem Anwender eine vor Ort eigenständige und schnelle Anwendung. Eine Datenbank 22 mit Einstellwerten für Düngerstreuer und/oder zum Abgleich gemessener Ist-Düngerverteilungen oder dergleichen Zwecke lässt sich in das Mobilfunkgerät 8 ebenso auf flexible Weise einbinden und/oder laufend aktualisieren.

Die Erfindung wurde beispielhaft anhand eines Mobilfunkgeräts 8 beschrieben, das beispielsweise ein Mobilfunktelefon ist. Stattdessen könnten prinzipiell beliebige mobile und kommunikationsfähige Rechner, wie Notebooks, Tablet-PC oder dergleichen zur Bildauswertung, Berechnung der Düngerverteilung, Datenbankabfrage, Ausgabe von Ergebnissen und/oder Einstellempfehlungen verwendet werden.

Ebenso ließen sich beliebige Kameras an derartige mobile Rechner anschließen oder in diese integrieren. Der Datenverkehr mit dem Düngeservice-Server 20 lässt sich prinzipiell über beliebige Heimnetzwerke, Telefonleitungen oder dergleichen bewerkstelligen.

Die sortenreine Abbildung von Streugut 2 und die Auswertung in Farbwinkel-Histogrammen 16, 17 ist sowohl mobil als auch zentral mittels entsprechender Datenbanken möglich.

## Patentansprüche

1. Verfahren zum Bestimmen einer Verteilung von landwirtschaftlichem Streugut (2), das insbesondere aus Düngerkörnern (2a) besteht, wobei das Streugut (2) auf einer Auffangfläche (4b) wenigstens einer Haftmatte/-platte/-schale (4) aufgefangen und die Verteilung des Streuguts (2) mittels Bildauswertung ermittelt wird, **dadurch gekennzeichnet, dass** die Auffangfläche (4b) einen Farbton (11) aufweist, der sich von einem Farbton (12) des Streuguts (2) im HSI/HSL/HSV-Farbraum um einen Farbwinkel (H) von wenigstens 20°, insbesondere wenigstens 40°, unterscheidet, und, dass der Farbton (11) der Auffangfläche (4b) in einem Bereich des Farbwinkels (H) von 230° bis 310°, insbesondere von 270° bis 290°, des HSI/HSL/HSV-Farbraums liegt.

2. Verfahren nach Anspruch 1, wobei die Auffangfläche im HSI/HSL/HSV-Farbraum eine Farbsättigung (S) von wenigstens 90% und/oder eine Farbhelligkeit (I, L, V) von wenigstens 40% aufweist.

3. Verfahren nach einem der vorigen Ansprüche, wobei der Farbton (11) der Auffangfläche (4b) in Form eines Farbwinkels (H) oder Farbwinkelbereichs des HSI/HSL/HSV-Farbraums in einer Recheneinheit (9) zur Bildauswertung gespeichert wird.

4. Verfahren nach einem der vorigen Ansprüche, wobei Bilddaten der Auffangfläche (4b) mit aufgefangenem Streugut (2) bei der Bildauswertung aus RGB-Farbkanälen in den HSI/HSL/HSV-Farbraum transformiert und in einem Farbwinkelfilter gefiltert werden.

5. Verfahren nach Anspruch 4,
wobei der Farbwinkelfilter Bildpunkten, deren Farbwinkel (H) in einem der Auffangfläche (4b) zugeordneten Filterwinkelbereich des HSI/HSL/HSV-Farbraums liegt, einen Hintergrundwert (14), insbesondere den binären Wert 0, zuordnet und Bildpunkten, deren Farbwinkel (H) außerhalb des Filterwinkelbereichs liegt, einen Vordergrundwert (15), insbesondere den binären Wert 1.

6. Verfahren nach Anspruch 5,
wobei die Anzahl von Bildpunkten mit dem Vordergrundwert (15) und die Anzahl von Bildpunkten mit dem Hintergrundwert (14) für wenigstens einen Auswertbereich (4c) der Auffangfläche (4b) bestimmt werden.

7. Verfahren nach wenigstens einem der vorigen Ansprüche,
wobei ferner ein RGB-Farbabgleich an der Auffangfläche (4b) mit aufgefangenem Streugut (2), insbesondere einschließlich Weißabgleich und/oder Schwarzabgleich, anhand von entsprechend gefärbten Kalibrierungsflächen (R, G, B, W, SW) vorgenommen wird, die auf der Haftmatte/-platte/-schale (4) ausgebildet sind oder an dieser angebracht werden.

8. Verfahren nach einem der vorigen Ansprüche,
wobei die Verteilung des Streuguts (2) quer zur Fahrtrichtung (3a) eines Schleuderstreuers (3) bestimmt wird.

9. Haftmatte/-platte/-schale (4) für die bildgebende Bestimmung einer Verteilung von landwirtschaftlichem Streugut (2), das insbesondere aus Düngerkörnern (2a) besteht, wobei die Haftmatte/-platte/-schale (4) eine mittels abstehender Strukturen eine Vielzahl ausgebildete Auffangräume (4a) aufweisende Auffangfläche (4b) zum Auffangen des Streuguts (2) umfasst,
**dadurch gekennzeichnet, dass** die Auffangfläche (4b) einen Farbton (11) aufweist, der in einem Bereich des Farbwinkels (H) von 270° bis 290° des HSI/HSL/HSV-Farbraums liegt.

10. Haftmatte/-platte/-schale nach Anspruch 9,
wobei die Auffangfläche (4b) im HSI/HSL/HSV-Farbraum eine Farbsättigung (S) von wenigstens 90% und/oder eine Farbhelligkeit (I, S, V) von wenigstens 40% aufweist.

11. Haftmatte/-platte/-schale nach Anspruch 9 oder 10, ferner umfassend je wenigstens eine roten, grüne und blaue Kalibrierungsfläche (R, G, B) für einen RGB-Farbabgleich von Bilddaten der Haftmatte/-platte/- schale (4) und des Streuguts (2).

12. Haftmatte/-platte/-schale nach einem der Ansprüche 9 bis 11, ferner umfassend wenigstens einen weiße und/oder schwarze Kalibrierungsfläche (W, SW) für einen Weißabgleich und/oder Schwarzabgleich von Bilddaten der Haftmatte/-platte/-schale (4) und des Streuguts (2).

## Claims

1. Method for determining a distribution of agricultural spreading material (2), which in particular consists of fertiliser grains (2a), wherein the spreading material (2) is collected on a collecting area (4b) of at least one adhesion mat/plate/tray (4) and the distribution of the spreading material (2) is ascertained by means of image evaluation,
**characterized in that** the collecting area (4b) has a hue (11) that differs from a hue (12) of the spreading material (2) in the HSI/HSL/HSV colour space by a colour angle (H) of at least 20°, in particular at least 40°, and **in that** the hue (11) of the collecting area (4b) lies in a range of the colour angle (H) of 230° to 310°, in particular of 270° to 290°, of the HSI/HSL/HSV colour space.

2. Method according to Claim 1,
wherein the collecting area has a colour saturation (S) of at least 90% and/or a colour brightness (I, L, V) of at least 40% in the HSI/HSL/HSV colour space.

3. Method according to either of the preceding claims,
wherein the hue (11) of the collecting area (4b) is stored in the form of a colour angle (H) or colour angle range of the HSI/HSL/HSV colour space in a computing unit (9) for the image evaluation.

4. Method according to any of the preceding claims,
wherein image data of the collecting area (4b) with collected spreading material (2), during the image evaluation, are transformed from RGB colour channels into the HSI/HSL/HSV colour space and are filtered in a colour angle filter.

5. Method according to Claim 4,
wherein the colour angle filter assigns a background value (14), in particular the binary value 0, to pixels whose colour angle (H) lies in a colour angle range of the HSI/HSL/HSV colour space that is assigned to the collecting area (4b), and assigns a foreground value (15), in particular the binary value 1, to pixels whose colour angle (H) lies outside the colour angle range.

6. Method according to Claim 5,
wherein the number of pixels having the foreground value (15) and the number of pixels having the background value (14) are determined for at least one evaluation region (4c) of the collecting area (4b) .

7. Method according to according to at least one of the preceding claims,
wherein an RGB colour balancing on the collecting area (4b) with collected spreading material (2), in particular including white balancing and/or black balancing, is furthermore performed on the basis of correspondingly coloured calibration areas (R, G, B, W, SW) which are formed on the adhesion mat/plate/tray (4) or are attached thereto.

8. Method according to any of the preceding claims,
wherein the distribution of the spreading material (2) is determined transversely with respect to the travel direction (3a) of a centrifugal spreader (3) .

9. Adhesion mat/plate/tray (4) for the imaging determination of a distribution of agricultural spreading material (2), which in particular consists of fertiliser grains (2a), wherein the adhesion mat/plate/tray (4) comprises a collecting area (4b) for collecting the spreading material (2), said collecting area having a multiplicity of collecting spaces (4a) formed by means of projecting structures,
**characterized in that** the collecting area (4b) has a hue (11) that lies in a range of the colour angle (H) of 270° to 290° of the HSI/HSL/HSV colour space.

10. Adhesion mat/plate/tray according to Claim 9,
wherein the collecting area has a colour saturation (S) of at least 90% and/or a colour brightness (I, S, V) of at least 40% in the HSI/HSL/HSV colour space.

11. Adhesion mat/plate/tray according to Claim 9 or 10, furthermore comprising in each case at least one red, green and blue calibration area (R, G, B) for an RGB colour balancing of image data of the adhesion mat/plate/tray (4) and of the spreading material (2).

12. Adhesion mat/plate/tray according to any of Claims 9 to 11, furthermore comprising at least one white and/or black calibration area (W, SW) for a white balancing and/or black balancing of image data of the adhesion mat/plate/tray (4) and of the spreading material (2).

## Revendications

1. Procédé de détermination d'une distribution de matière d'épandage (2) agricole, laquelle se compose notamment de grains d'engrais (2a), la matière d'épandage (2) étant interceptée sur une surface d'interception (4b) d'au moins une natte/plaque/coque adhérente (4) et la distribution de la matière d'épandage (2) étant déterminée par analyse d'image, **caractérisé en ce que**
la surface d'interception (4b) possède une teinte (11) qui se différencie de d'une teinte (12) de la matière d'épandage (2) dans l'espace colorimétrique HSI/HSL/HSV d'un angle de teinte (H) d'au moins 20°, notamment d'au moins 40°, et
**en ce que** le teinte (11) de la surface d'interception (4b) se trouve dans une plage de l'angle de teinte (H) de 230° à 310°, notamment de 270° à 290° de l'espace colorimétrique HSI/HSL/HSV.

2. Procédé selon la revendication 1, la surface d'interception présentant dans l'espace colorimétrique HSI/HSL/HSV une saturation de couleur (S) d'au moins 90 % et/ou une brillance des couleurs (I, L, V) d'au moins 40 %.

3. Procédé selon l'une des revendications précédentes, la teinte (11) de la surface d'interception (4b) étant mémorisée dans une unité de calcul (9) sous la forme d'un angle de teinte (H) ou d'une plage d'angles de teinte dans l'espace colorimétrique HSI/HSL/HSV en vue de l'analyse d'image.

4. Procédé selon l'une des revendications précédentes, les données d'image de la surface d'interception (4b) avec la matière d'épandage (2) interceptée étant transformées des canaux de couleurs RGB dans l'espace colorimétrique HSI/HSL/HSV lors de l'analyse de l'image et filtrées dans un filtre d'angle de teinte.

5. Procédé selon la revendication 4, le filtre d'angle de teinte associant une valeur d'arrière-plan (14), notamment la valeur binaire 0, aux pixels dont l'angle de teinte (H) se trouve dans une plage d'angles de teinte de l'espace colorimétrique HSI/HSL/HSV associée à la surface d'interception (4b) et une valeur de premier plan (15), notamment la valeur binaire 1, aux pixels dont l'angle de teinte (H) se trouve à l'extérieur de la plage d'angles de teinte.

6. Procédé selon la revendication 5, le nombre de pixels ayant la valeur de premier plan (15) et le nombre de pixels ayant la valeur d'arrière-plan (14) étant déterminés pour au moins une zone d'analyse (4c) de la surface d'interception (4b).

7. Procédé selon au moins l'une des revendications précédentes, un équilibrage des couleurs RGB étant en outre effectue au niveau de la surface d'interception (4b) avec la matière d'épandage (2) interceptée, notamment en incluant l'équilibrage des blancs et/ou l'équilibrage des noirs, à l'aide de surfaces d'étalonnage (R, G, B, W, SW) colorées en conséquence qui sont représentées sur la natte/plaque/coque adhérente (4) ou montées sur celle-ci.

8. Procédé selon au moins l'une des revendications précédentes, la distribution de la matière d'épandage (2) étant déterminée transversalement au sens de déplacement (3a) d'une épandeuse centrifuge (3).

9. Natte/plaque/coque adhérente (4) pour la détermination par formation d'image d'une distribution de matière d'épandage (2) agricole, laquelle se compose notamment de grains d'engrais (2a), la natte/plaque/coque adhérente (4) comportant une surface d'interception (4b), qui présente au moyen de structures saillantes une pluralité d'espaces d'interception (4a) configurés, destinée à intercepter la matière d'épandage (2),
**caractérisée en ce que** la surface d'interception (4b) présente une teinte (11) qui se trouve dans une plage de l'angle de teinte (H) de 270° à 290° de l'espace colorimétrique HSI/HSL/HSV.

10. Natte/plaque/coque adhérente selon la revendication 9, la surface d'interception (4b) présentant dans l'espace colorimétrique HSI/HSL/HSV une saturation de couleur (S) d'au moins 90 % et/ou une brillance des couleurs (I, S, V) d'au moins 40 %.

11. Natte/plaque/coque adhérente selon la revendication 9 ou 10, comprenant en plus respectivement au moins une surface d'étalonnage (R, G, B) rouge, verte et bleue pour un équilibrage des couleurs RGB des données d'image de la natte/plaque/coque adhérente (4) et de la matière d'épandage (2).

12. Natte/plaque/coque adhérente selon l'une des revendications 9 à 11, comprenant en plus au moins une surface d'étalonnage (W, SW) blanche et/ou noire pour un équilibrage des blancs et/ou un équilibrage de noirs de la natte/plaque/coque adhérente (4) et de la matière d'épandage (2).
